# EUROPEAN PATENT SPECIFICATION

(11) **EP 2 577 853 B1**
(45) Date of publication and mention of the grant of the patent: **14.05.2014**
(21) Application number: 11724589.4
(22) Date of filing: 26.05.2011
(51) Int. Cl.: H02K 29/03, H02K 1/27, H02K 21/22

(54) **PERMANENT MAGNET MULTIPOLE ALTERNATOR FOR ELECTRICAL ENERGY GENERATION SYSTEMS**
MERHPOLIGER PERMANENTMAGNETGENERATOR FÜR STROMERZEUGUNGSSYSTEME
ALTERNATEUR MULTIPOLAIRE À AIMANTS PERMANENTS POUR SYSTÈMES DE PRODUCTION D'ÉNERGIE ÉLECTRIQUE

(30) Priority: 27.05.2010 IT VE20100026
(43) Date of publication of application: 10.04.2013
(73) Proprietor: IDM S.R.L., 31044 Montebelluna (IT)
(72) Inventor: IMOLI, Dante, I-31044 Montebelluna (IT)
(74) Representative: Piovesana, Paolo
(86) International application number: PCT/EP2011/058680
(87) International publication number: WO 2011/147935

(56) References cited:
- JP-A- 2000 041 367
- US-A1- 2007 126 308

## Description

The present invention relates to a permanent magnet multipole alternator for electrical energy generation systems, such as electricity generating units, wind generators and the like.

Electricity generating units are known for generating a d.c. voltage to be used for example for battery chargers. They comprise an internal combustion engine of variable or non-variable rotational speed, an alternator provided with an excitation winding and driven by said internal combustion engine, a rectifier circuit for the alternating current generated by said alternator, a system for adjusting the alternator excitation on the basis of the load applied to the rectifier circuit, and a possible system for adjusting the engine rotational speed on the basis of the load.

Although from a theoretical viewpoint these known electricity generating units have proved satisfactory and are widely used, from the practical aspect they present a series of drawbacks, consisting particularly of their considerable weight and the large size of the alternator, and the need to provide an electronic circuit for controlling its excitation.

Electricity generating units are also known comprising an internal combustion engine of variable rotational speed, an alternator without excitation windings but using permanent magnets, preferably of ceramic material or rare earths, an electronic circuit for converting the alternating current generated by said alternator into direct current, and a possible system for controlling the rotational speed of the internal combustion engine on the basis of the load applied to the electronic conversion circuit.

These known electricity generating units have virtually eliminated the drawbacks encountered in the previously described type, but have introduced a further important drawback, related to their constructional complexity, their reliability and the consequently high cost of the electronic conversion circuit which, inter alia, is a source of electromagnetic disturbance.

An object of the invention is to also eliminate these drawbacks by proposing a permanent magnet multipole alternator to be coupled to a mechanical energy source to form electrical energy generation systems, such as electricity generating units, wind generators and the like, which is of simple construction, small overall size, low cost and reliable operation, and uses a simple, low-cost electronic conversion circuit which produces very low electromagnetic disturbances and which by virtue of a limited generated voltage crest factor, makes it possible to rapidly vary the r.p.m. of the internal combustion engine between its minimum and maximum rotational speed.

This and other objects which will be more apparent from the ensuing description are attained, according to the invention, by a permanent magnet multipole alternator as described in claim 1.

A preferred embodiment of the present invention is further clarified hereinafter with reference to the accompanying drawings, in which:

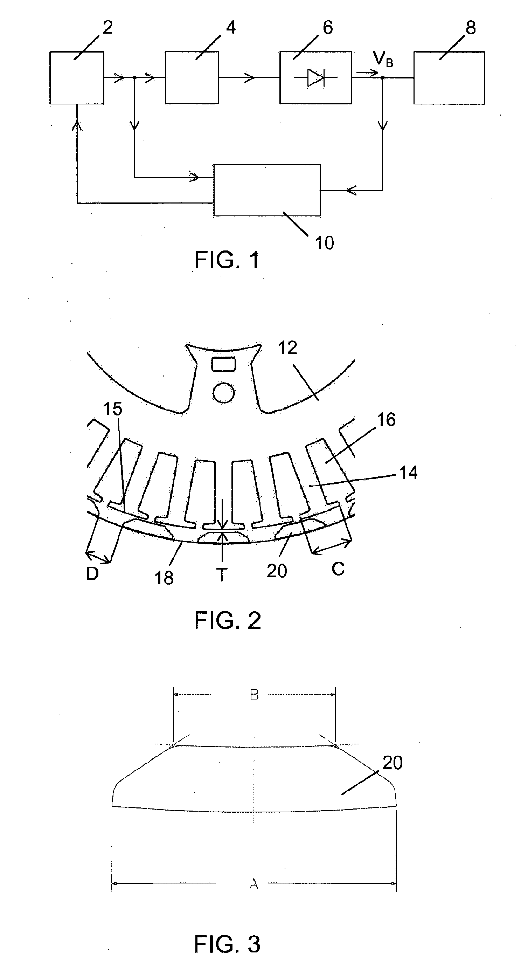

- Figure 1: shows a block diagram of an electricity generating unit according to the invention,
- Figure 2: is a section perpendicular to the axis of rotation showing an alternator portion of the electricity generating unit, and
- Figure 3: shows on a larger scale an axial section through one of the magnets applied to the alternator rotor.

As can be seen from the figures, the permanent magnet multipole alternator according to the invention pertains to an electricity generating unit and comprises an internal combustion engine 2 rotating an alternator 4 which generates an a.c. voltage feeding a non-controlled bridge rectifier circuit 6. The rectified voltage V_{B} leaving the bridge 6 feeds the load 8, which is variable, and a circuit 10 which controls the rotational speed of the internal combustion engine 2. This control circuit could also be independently powered by the voltage V_{B}.

The alternator 4 is of multipole multi-phase type and comprises an internal stator 12 with a plurality of teeth 14, each terminating in a circumferentially projecting extension piece 15. The teeth are separated by a like number of slots 16 intended to house the windings in which the electromotive force is induced. The alternator also comprises an external rotor 18, to the inner surface of which, facing the expansion pieces 15 of the teeth 14 of the stator 12, a plurality of permanent magnets 20 are applied, advantageously made of rare earths.

The magnets 20 are of approximately rounded-corner trapezoidal shape in cross-section perpendicular to the alternator axis, with the major base of their two bases being curved concentrically to the axis of the alternator and the minor base being either curved concentrically to the alternator axis and hence be concave, or being convex, or being flat and perpendicular to a radius of the alternator.

The ratio between the length of the major base A, which adheres to the inner surface of the rotor 18, and the length of the minor base B, which faces the extension pieces 15 of the stator tooth 14, is between 1.2 and 6, preferably between 1.3 and 1.8.

In addition, the mininum distance T between each magnet 20 and the extension pieces 15 of the tooth 14, measured in the radial direction, is between 0.5 and 1.8 mm, preferably between 0.8 and 1.4 mm, the ratio between the length C of each extension piece 15 of the tooth 14, measured in the circumferential direction, and the distance D between the magnets 20, being between 0.5 and 2, preferably between 0.7 and 1.3.

It has been found experimentally that by virtue of the particular shape of the magnets, their arrangement within the rotor, and their dimensional ratios, the waveform of the voltage generated in each stator winding, which in the case of magnets of constant thickness should reveal the presence of distorting harmonics, presents instead a substantially sinusoidal or rather substantially trapezoidal pattern, to hence, after rectification through a traditional controlled or non-controlled bridge rectifier 6, result in a minimum voltage drop across its ends in passing from idle operation to rated load operation.

By replacing the electronic circuit for converting alternating current into direct current with a non-controlled bridge rectifier 6, electromagnetic disturbances are virtually eliminated, these representing one of the main drawbacks of traditional electronic conversion circuits.

Moreover, if an electronic circuit provided with either a controlled or a non-controlled bridge rectifier is connected to the alternator, with the new solution the waveform of the voltage generated by it, by virtue of the low crest factor and the likewise low voltage drops between full load and idling, enables the internal combustion engine r.p.m. to be varied within ranges more suitable for the application. For example for a battery charger without a controlled bridge rectifier, the r.p.m. change undergone by the internal combustion engine in passing from idling to full load, becomes less large and involves more rapid engine response times such as to make the final output voltage regulation more stable.

In contrast, for an inverter system, a possible final application could be for a larger r.p.m. range than for traditional alternators. The maximum r.p.m. variation for the full load internal combustion engine depends on the maximum voltage withstandable by the constituent power components of the input bridge rectifier. As the output voltage of the alternator without applied loads increases linearly, the alternator sizing is calculated such that its no-load voltage, delivered at engine idling r.p.m., is withstandable by said power components. For these applications the minimum working r.p.m. of the internal combustion engine depends on that value of the threshold voltage able to energize the electronic circuit. Because of the fact that with the alternator of the invention the voltage drop between idling operation and full load operation remains low, as also hence does the crest factor, the engine can operate within a wider r.p.m. range, enabling the electronic circuit to remain in the energized state. This enables the internal combustion engine to be used at lower r.p.m. values than a traditional alternator when the output power required from the electricity generating unit is nearly zero, to hence reduce both the fuel consumption and the noise emission under these conditions.

Another important advantage obtainable with the invention is that the stator windings can be star-connected while still maintaining minimum voltage drop across their ends in passing from idle operation to rated load operation. This always makes it possible and simple to connect the stator windings to a traditional engine starter device.

## Claims

1. A permanent magnet multipole alternator for electrical energy generation systems, comprising an external rotor (18) mechanically connectable to a mechanical energy source of variable rotational velocity, and provided with permanent magnets (20), an internal stator (12) provided with windings housed in slots (16) defined by mutually equidistant teeth (14) terminating in radially projecting extension pieces (15), an electronic circuit for converting the alternating current generated by said alternator into substantially direct current, and a circuit (10) for controlling the rotational speed of said mechanical energy source on the basis of the load, **characterised in that**:
- said electronic conversion circuit consists of a bridge rectifier circuit (6),
- the permanent magnets (20) of the rotor (18) are of approximately isosceles trapezium shape in cross-section perpendicular to the alternator axis, with their major base curved concentrically to the alternator axis and adhering to the inner surface of the rotor (18), and with their minor base facing the extension pieces (15) of the teeth (14) of the stator (12),
- the distance (T) measured in the radial direction between the magnets (20) and the extension pieces (15) of the stator teeth (14) is between 0.8 and 1.8 mm,
- the ratio between the length of the major base (A) and the length of the minor base (B) of each magnet is between 1.2 and 6, and
- the ratio between the length (C) of each extension piece (15) of the stator teeth (14), measured in the circumferential direction, and the distance (D) between the magnets, is between 0.5 and 2.

2. A multipole alternator as claimed in claim 1, **characterised in that** said conversion electronic circuit consists of a non-controlled bridge rectifier.

3. A multipole alternator as claimed in one or more of the preceding claims, **characterised in that** the minor base of each permanent magnet (20) is concave and has its axis substantially coincident with the alternator axis.

4. A multipole alternator as claimed in one or more of the preceding claims, **characterised in that** the minor base of each permanent magnet (20) is perpendicular to the alternator radius.

5. A multipole alternator as claimed in one or more of the preceding claims, **characterised in that** the minor base of each permanent magnet (20) is concave convex.

6. A multipole alternator as claimed in claim 1, **characterised in that** the permanent magnets (20) are made of rare earths.

7. A multipole alternator as claimed in one or more of the preceding claims, **characterised in that** the circuit (10) for controlling the rotational speed of the internal combustion engine is powered by the voltage (V_{B}) at the exit of said rectifier circuit (6).

8. A multipole alternator as claimed in one or more of the preceding claims, **characterised in that** the ratio between the length of the major base (A) and the length of the minor base (B) of each magnet (20) is between 1.3 and 1.8.

9. A multipole alternator as claimed in one or more of the preceding claims, **characterised in that** the minimum distance between each magnet (20) and the extension pieces (15) of the stator teeth (14) is between 0.8 and 1.4 mm.

## Patentansprüche

1. Vielpoliger Permanentmagnet-Wechselstromgenerator für elektrische Energieerzeugungssysteme, umfassend einen äußeren Rotor (18), der mechanisch mit einer mechanischen Energiequelle mit variabler Drehzahl verbunden werden kann und mit Permanentmagneten (20) versehen ist, einen inneren Stator (12), der mit Wicklungen versehen ist, die in Schlitzen (16) untergebracht sind, die von zueinander äquidistanten Zähnen (14) definiert werden, die in radial vorstehenden Verbreiterungsstücken (15) enden, eine elektronische Schaltung zum Umwandeln des vom Wechselstromgenerator erzeugten Wechselstroms in im Wesentlichen Gleichstrom, und eine Schaltung (10) zum Steuern der Drehzahl der mechanischen Energiequelle auf Grundlage der Last, **dadurch gekennzeichnet, dass**:
- die elektronische Wandlerschaltung aus einer Brückengleichrichterschaltung (6) besteht,
- die Permanentmagneten (20) des Rotors (18) im zur Wechselstromgeneratorachse perpendikulären Querschnitt annähernd die Form eines gleichschenkligen Trapezes haben, wobei die längere Grundseite konzentrisch zur Wechselstromgeneratorachse gekrümmt ist und an der Innenfläche des Rotors (18) haftet und wobei die kürzere Grundseite den Verbreiterungsstücken (15) der Zähne (14) des Stators (12) zugewandt ist,
- der in radialer Richtung gemessene Abstand (T) zwischen den Magneten (20) und den Verbreiterungsstücken (15) der Statorzähne (14) zwischen 0,8 und 1,8 mm beträgt,
- das Verhältnis zwischen der Länge der längeren Grundseite (A) und der Länge der kürzeren Grundseite (B) von jedem Magneten zwischen 1,2 und 6 beträgt, und
- das Verhältnis zwischen der in Umfangsrichtung gemessenen Länge (C) von jedem Verbreiterungsstück (15) der Statorzähne (14) und dem Abstand (D) zwischen den Magneten zwischen 0,5 und 2 beträgt.

2. Vielpoliger Wechselstromgenerator nach Anspruch 1, **dadurch gekennzeichnet, dass** die elektronische Wandlerschaltung aus einem ungesteuerten Brückengleichrichter besteht.

3. Vielpoliger Wechselstromgenerator nach einem oder mehreren der vorhergehenden Ansprüche, **dadurch gekennzeichnet, dass** die kürzere Grundseite von jedem Permanentmagneten (20) konkav ist und ihre Achse im Wesentlichen mit der Wechselstromgeneratorachse zusammenfällt.

4. Vielpoliger Wechselstromgenerator nach einem oder mehreren der vorhergehenden Ansprüche, **dadurch gekennzeichnet, dass** die kürzere Grundseite von jedem Permanentmagneten (20) perpendikulär zum Radius des Wechselstromgenerators ist.

5. Vielpoliger Wechselstromgenerator nach einem oder mehreren der vorhergehenden Ansprüche, **dadurch gekennzeichnet, dass** die kürzere Grundseite von jedem Permanentmagneten (20) konvex ist.

6. Vielpoliger Wechselstromgenerator nach Anspruch 1, **dadurch gekennzeichnet, dass** die Permanentmagneten (20) aus seltenen Erden bestehen.

7. Vielpoliger Wechselstromgenerator nach einem oder mehreren der vorhergehenden Ansprüche, **dadurch gekennzeichnet, dass** die Schaltung (10) zum Steuern der Drehzahl des Verbrennungsmotors mit der Spannung (V_{B}) am Ausgang der Gleichrichterschaltung (6) versorgt wird.

8. Vielpoliger Wechselstromgenerator nach einem oder mehreren der vorhergehenden Ansprüche, **dadurch gekennzeichnet, dass** das Verhältnis zwischen der Länge der längeren Grundseite (A) und der Länge der kürzeren Grundseite (B) von jedem Magneten (20) zwischen 1,3 und 1,8 beträgt.

9. Vielpoliger Wechselstromgenerator nach einem oder mehreren der vorhergehenden Ansprüche, **dadurch gekennzeichnet, dass** der Mindestabstand zwischen jedem Magneten (20) und den Verlängerungsstücken (15) der Statorzähne (14) zwischen 0,8 und 1,4 mm beträgt.

## Revendications

1. Alternateur multipolaire à aimants permanents destiné à des systèmes de génération d'énergie électrique, comprenant un rotor externe (18) raccordable mécaniquement à une source d'énergie mécanique de vélocité rotationnelle variable, et muni d'aimants permanents (20), un stator interne (12) muni d'enroulements logés dans des fentes (16) définies par des dents mutuellement équidistantes (14) se terminant en parties d'extension se projetant radialement (15), un circuit électronique, destiné à convertir le courant alternatif généré par ledit alternateur en courant sensiblement continu, et un circuit (10), destiné à commander la vitesse rotationnelle de ladite source d'énergie mécanique sur base de la charge, **caractérisé en ce que** :
- ledit circuit de conversion électronique consiste en un circuit redresseur en pont (6),
- les aimants permanents (20) du rotor (18) sont approximativement en forme de trapèze isocèle en coupe transversale perpendiculaire à l'axe de l'alternateur, leur grande base étant incurvée de manière concentrique par rapport à l'axe de l'alternateur et adhérant à la surface interne du rotor (18), et leur petite base étant orientée vers les parties d'extension (15) des dents (14) du stator (12),
- la distance (T) mesurée dans la direction radiale entre les aimants (20) et les parties d'extension (15) des dents du stator (14) se situe entre 0,8 et 1,8 mm,
- le rapport entre la longueur de la grande base (A) et la longueur de la petite base (B) de chaque aimant se situe entre 1,2 et 6, et
- le rapport entre la longueur (C) de chaque partie d'extension (15) des dents du stator (14), mesurée dans le sens circonférentiel, et la distance (D) entre les aimants vaut entre 0,5 et 2.

2. Alternateur multipolaire selon la revendication 1, **caractérisé en ce que** ledit circuit électronique de conversion consiste en un redresseur en pont non commandé.

3. Alternateur multipolaire selon l'une ou plusieurs des revendications précédentes, **caractérisé en ce que** la petite base de chaque aimant permanent (20) est concave et présente un axe coïncidant sensiblement à l'axe de l'alternateur.

4. Alternateur multipolaire selon l'une ou plusieurs des revendications précédentes, **caractérisé en ce que** la petite base de chaque aimant permanent (20) est perpendiculaire au rayon de l'alternateur.

5. Alternateur multipolaire selon l'une ou plusieurs des revendications précédentes, **caractérisé en ce que** la petite base de chaque aimant permanent (20) est convexe.

6. Alternateur multipolaire selon la revendication 1, **caractérisé en ce que** les aimants permanents (20) sont fabriqués en terres rares.

7. Alternateur multipolaire selon l'une ou plusieurs des revendications précédentes, **caractérisé en ce que** le circuit (10) destiné à commander la vitesse rotationnelle du moteur à combustion interne est alimenté par la tension (V_{B}) à la sortie dudit circuit redresseur (6).

8. Alternateur multipolaire selon l'une ou plusieurs des revendications précédentes, **caractérisé en ce que** le rapport entre la longueur de la grande base (A) et la longueur de la petite base (B) de chaque aimant (20) se situe entre 1,3 et 1,8.

9. Alternateur multipolaire selon l'une ou plusieurs des revendications précédentes, **caractérisé en ce que** la distance minimale entre chaque aimant (20) et les parties d'extension (15) des dents du stator (14) se situe entre 0,8 et 1,4 mm.
